# EUROPÄISCHE PATENTSCHRIFT

(11) **EP 3 374 447 B1**
(45) Veröffentlichungstag und Bekanntmachung des Hinweises auf die Patenterteilung: **07.04.2021**
(21) Anmeldenummer: 16794213.5
(22) Anmeldetag: 09.11.2016
(51) Int. Cl.: C09K 11/06, C09D 11/10, C08L 61/30, C09D 11/106, C09B 67/02, C08L 61/34, C09B 67/08, B42D 25/382, C08L 61/12, C08L 61/28, C08L 61/24, C08L 61/06, C08L 33/12, B42D 25/378, B42D 25/387, C08K 3/013, C08K 5/00, C08L 25/06, C09D 11/50, C09D 11/107, C09D 11/103

(54) **SICHERHEITSPIGMENT BASIEREND AUF KERN-HÜLLE-TEILCHEN UND HERSTELLUNGSVERFAHREN**
CORE-SHELL PARTICLE-BASED SECURITY PIGMENT, AND PRODUCTION METHOD
PIGMENT DE SÉCURITÉ À BASE DE PARTICULES COEUR-ÉCORCE ET SON PROCÉDÉ DE FABRICATION

(30) Priorität: 11.11.2015 DE 102015014537
(43) Veröffentlichungstag der Anmeldung: 19.09.2018
(73) Patentinhaber: Giesecke+Devrient Currency Technology GmbH, 81677 München (DE)
(72) Erfinder: KECHT, Johann, 81677 München (DE); SCHLOSSBAUER, Axel, 80799 München (DE)
(86) Internationale Anmeldenummer: PCT/EP2016/001862
(87) Internationale Veröffentlichungsnummer: WO 2017/080653

(56) Entgegenhaltungen:
- DE-A1- 19 546 757
- JP-A- H06 148 925
- US-A1- 2003 055 115

## Beschreibung

Die Erfindung betrifft ein Verfahren zum Herstellen eines Sicherheitspigments basierend auf Kern-Hülle-Teilchen. Die Erfindung betrifft insbesondere ein spezielles Verfahren zur Herstellung von Kern-Hülle-Teilchen aus zwei verschiedenen Polymeren. Bevorzugt wird ein unvernetztes, weniger polares Polymer wie z.B. Polymethylmethacrylat (PMMA) als Kernmaterial und ein stark quervernetztes polares Polymer wie z.B. Melamin-Formaldehyd-Harz (MF) als Hüllmaterial verwendet.

Die JP H06 148925 A beschreibt ein Verfahren zum Herstellen von Tonerpartikeln mit Kern-Hülle-Aufbau, bei dem das dem Kern zugrunde liegende Polymer und das der Hülle zugrunde liegende Polymer im organischen Lösungsmittel vorliegen und zusammen die Form von Tröpfchen in einer wässrigen Phase bilden, wobei um das Tröpfchen herum ein Tensid vorhanden ist.

Die US 2003/055115 A1 beschreibt ein Verfahren zum Herstellen von Kern-Hülle-Teilchen, wobei die Erzeugung einer polymeren Hülle nach dem Erzeugen eines einen Farbstoff enthaltenden polymeren Kerns durchgeführt wird oder ein Verfahren durchgeführt wird, bei dem ein Kern und eine Hülle gleichzeitig erzeugt werden.

Der vorliegenden Erfindung liegt die Aufgabe zugrunde, eine gegenüber dem Stand der Technik verbesserte Methode zur Herstellung eines Merkmalsstoffes bereitzustellen.

Diese Aufgabe wird durch die im unabhängigen Anspruch definierte Merkmalskombination gelöst. Weiterbildungen der Erfindung sind Gegenstand der Unteransprüche.

### Zusammenfassung der Erfindung

Verfahren zum Herstellen eines Sicherheitspigments aus Kern-Hülle-Teilchen, wie im Anspruch 1 definiert.

### Ausführliche Beschreibung der Erfindung

Gegenstand der Erfindung ist ein spezielles Verfahren zur Herstellung von Kern-Hülle-Teilchen aus zwei verschiedenen Polymeren. Bevorzugt werden ein unvernetztes, weniger polares Polymer wie z.B. Polymethylmethacrylat (PMMA) als Kernmaterial und ein stark quervernetztes, polares Polymer wie z.B. Melamin-Formaldehyd-Harz (MF) als Hüllmaterial verwendet.

Dabei werden Lösungsmittel-haltige Tropfen gebildet, umhüllt und anschließend das Lösemittel entfernt, um schließlich umhüllte feste Kerne zu erhalten.

Das unvernetzte (Kern-)Polymer wird zusammen mit einem Merkmalsstoff in einem organischen Lösemittel gelöst und mithilfe eines Emulgators in Form kleiner Tröpfchen dispergiert. Anschließend werden die Tröpfchen durch schwach vernetztes Hüllmaterial umhüllt, das Lösungsmittel aus dem Kern entfernt (wodurch das Kernpolymer zusammen mit dem darin verteilten Merkmalsstoff im Kern ausfällt) und die Hülle anschließend durch weitere Vernetzung abgeschlossen.

Durch Einbettung von Merkmalsstoffen im Kern wird deren Stabilität gegenüber äußeren Einflüssen (z.B. organische Lösemittel, Einwirkung von Säuren und Basen) massiv erhöht und damit ihre Anwendbarkeit im Banknotenbereich ermöglicht bzw. verbessert.

Die Hülle aus MF schützt den Merkmalsstoff als quervernetztes, stark polares Polymer insbesondere vor unpolaren organischen Lösemitteln. Der Kern aus PMMA (weniger polares Polymer) schützt den Merkmalsstoff vor wässrigen oder stark polaren Lösemitteln, die durch das MF diffundieren könnten. Weiterhin nimmt PMMA die meisten Merkmalsstoffe sehr gut auf und ermöglicht so deren homogene Verteilung im Kernmaterial. Neben PMMA und MF können im erfindungsgemäßen Verfahren jedoch auch andere Polymerarten verwendet werden, um Kern-Hülle-Teilchen zu erzeugen.

Das erfindungsgemäße Herstellungsverfahren für die Kern-Hülle-Teilchen kombiniert vorteilhaft die bisher in unterschiedlichen Bereichen für völlig unterschiedliche Zwecke eingesetzten Verfahren des "Solvent Evaporation"-Prozesses und der MF-Verkapselung und erzielt so überraschend eine Stabilisierung von Sicherheitspigmenten gegen vielfältige chemische Angriffe.

Der "Solvent-Evaporation"-Prozess wird in den Bereichen der Pharmazie bzw. Mikrobiologie oft verwendet, um hydrophobe Stoffe (z.B. Medikamente) in einem Polymer einzubetten bzw. mit einem Polymer zu umhüllen (siehe z.B. Tice et. al, "Preparation of injectable controlled-release microcapsules by a solvent-evaporation process" Journal of Controlled Release, 2 (1985) 343-352). Dabei wird der Stoff zusammen mit einem Matrixmaterial (z.B. einem Polymer) in einem organischen Lösemittel gelöst und (oft zusammen mit einem Emulgator) in Wasser dispergiert. Durch Verdampfen des Lösemittels fallen das Matrixmaterial und der darin enthaltene Stoff in Form kleiner sphärischer Partikel bzw. Mikrokapseln aus. Es werden dabei jedoch keine Kern-Hülle-Teilchen gebildet, insbesondere wird keine Hülle um die Lösemitteltröpfchen herum angebracht, bevor daraus das Matrixmaterial ausgefällt wird.

Die Verkapselung von Lösemitteltröpfchen und anderen Flüssigkeiten mit MF und anderen Polymeren als Hüllmaterial ist in den Bereichen der Herstellung von Waschmitteln oder Kosmetika bekannt. Typische Anwendungsbereiche sind dabei oft die Erzeugung druckempfindlicher Mikrokapseln (z.B. zur Freisetzung von Duftstoffen beim Reiben einer Oberfläche) oder langsam durchlässiger Mikrokapseln (z.B. zur kontrollierten Freisetzung von Arzneimitteln und Pestiziden). Siehe z.B. EP 0978312 B2, EP 1438126 B1 und EP 0026914 B1.

Das Kernmaterial bleibt dabei für die Endanwendung meistens flüssig, oder es handelt sich um einen temperaturbedingten Phasenwechsel, der dazu führt, dass z.B. flüssiges Wachs im Kernmaterial aushärtet und somit einen festen Wachskern bildet.

In seltenen Fällen ist es möglich, direkt ein festes Kernmaterial mit MF zu umhüllen. Beispielsweise beschreibt das Beispiel 6 in der EP 1208382 B1 die Umhüllung von Fluoreszenzpartikeln mit MF. Dies ist jedoch auf wenige Einzelstoffe beschränkt und limitiert daher die verwendbaren Merkmalstoffe erheblich.

Das Umhüllen von Lösungsmittel-haltigen Tropfen und das anschließende Entfernen des Lösungsmittels, um schließlich umhüllte feste Kerne zu erhalten, wird jedoch im Stand der Technik nicht beschrieben.

Weiterhin behandeln die Schriften DE 102006008245 A1 und DE 102006008247 A1 die allgemeine Erzeugung von Sicherheitsmerkmalen auf Basis von Kern-Hülle-Teilchen. Darin werden jedoch feste Kernpartikel mit einer (beliebigen) Hülle verkapselt, sodass stets eine Abtrennung der Kernpartikel vor dem Verkapselungsschritt erforderlich ist. Dies führt zu technischen Schwierigkeiten bei der Separierung und erhöht die Prozesskosten.

Der Solvent-Evaporation-Prozess wird bisher dafür genutzt, sphärische Polymerpartikel mit darin gelösten bzw. im Kern des Partikels dispergierten Stoffen wie z.B. Medikamenten zu erzeugen. Eine Umhüllung eines festen Kerns mit einer Hülle aus einem zweiten Polymer ist hier nicht üblich bzw. sogar kontraproduktiv für die pharmazeutische Anwendung .

Bei der MF-Mikroverkapselung wird üblicherweise eine flüssige, als dispergierte Tröpfchen vorliegende Phase mikroverkapselt. Die Erzeugung einer Umhüllung einer festen Phase um Kern-Hülle-Teilchen ist nicht üblich, da es technisch deutlich einfacher ist, einen flüssigen Kern zu umhüllen.

Erfindungsgemäß werden Teile aus beiden Methoden kombiniert, um die flüssigen Tröpfchen des Solvent-Evaporation-Verfahrens mit MF zu umhüllen, bevor das Polymer im Kern ausfällt.

Der erste Prozessschritt basiert auf der Emulgierung von Tröpfchen aus organischen Lösemitteln in Wasser. Dafür sind nur solche Lösungsmittel geeignet, die in Wasser eine separate Phase ausbilden, das heißt nicht oder kaum mit Wasser mischbar sind. Dazu zählen beispielsweise bestimmte Ester wie Ethylacetat, bestimmte aromatische Lösemittel wie Toluol und Benzol, bestimmte Ether wie THF und bestimmte halogenierte Lösungsmittel. Bevorzugt wird als organisches Lösemittel ein chloriertes Lösungsmittel verwendet, wie z.B. Chloroform, Dichlormethan, 1,1,1-Trichlorethan, Trichlorethylen oder Tetrachlorethylen.

Als Kernmaterial geeignet sind sämtliche in den bevorzugten organischen Lösungsmitteln lösliche Polymere, bevorzugt in chlorierten Lösemitteln lösliche Polymere. Um die Löslichkeit zu erhöhen, sind die Polymere des Kernmaterials bevorzugt unverzweigt oder nur schwach verzweigt.

Die Kettenlängen der Polymere des Kernmaterials liegen dabei bevorzugt im Bereich von 1000 bis 1000 000 g/mol, besonders bevorzugt bei 50 000 bis 250 000 g/mol.

Das Polymer des Kernmaterials besteht aus Thermoplasten, bevorzugt aus einem thermoplastischen, unvernetzten Polymer. Gemäß einer bevorzugten Ausführungsform besteht das Polymer des Kernmaterials aus polymerisierten Ethylenderivaten, insbesondere bevorzugt aus Polystyrol (PS) oder Polyacrylaten, darunter bevorzugt Polymethylmethacrylat (PMMA), Polyvinylacetat (PVAC), Polyvinylchlorid (PVC), Polyacrylnitril (PAN) oder aus einem zwei oder mehrere dieser Polymere enthaltenden Copolymer wie z.B. Acrylnitril-Butadien-Styrol-Copolymer (ABS). Gemäß einer weiteren bevorzugten Ausführungsform handelt es sich bei den Ethylenderivaten um Polyethylen (PE), Polypropylen (PP) oder andere aus aliphatischen Kohlenstoffketten aufgebaute Polymere.

Gemäß einer weiteren bevorzugten Ausführungsform besteht das Polymer des Kernmaterials aus Polycarbonaten (PC), Polyamiden (PA) oder Polyestern wie Polyethylenterephthalat (PET).

Als Tenside bzw. Emulgatoren sind Stoffe geeignet, die das entsprechende organische Lösungsmittel in Wasser dispergieren können, beispielsweise nichtionische Tenside, anionische Tenside, kationische Tenside, amphotere Tenside. Bevorzugt werden anionische Tenside verwendet, oder eine Mischung aus anionischen Tensiden und nichtionischen Tensiden. Bevorzugte anionische Tenside sind Sulfat-basierte Tenside, z.B. Fettalkoholsulfate (Alkylsulfate) oder Fettalkoholethersulfate. Gemäß einer weiteren Ausführungsform sind die bevorzugten anionischen Tenside Carboxylat-basierte Tenside, z.B. Alkylcarboxylate. Gemäß einer weiteren Ausführungsform sind die bevorzugten anionischen Tenside Sulfonatbasierte Tenside, z.B. Alkylsulfonate. Gemäß einer weiteren Ausführungsform sind die bevorzugten anionischen Tenside Phosphatbasierte Tenside, z.B. Alkyletherphosphate.

Anionische Tenside haben den Vorteil, dass durch die negative Ladung der Kopfgruppe die Anlagerung von positiv geladenen Kondensationsprodukten aus der Hüllenbildung gefördert wird.

Bevorzugt werden die Tenside in einer Menge von 0,0001 bis 10 Gew.-% der wässrigen Lösung eingesetzt, weiter bevorzugt 0,1 bis 5 Gew.-%, insbesondere bevorzugt 0,5 bis 2 Gew.-%.

Die das Polymer (und das Merkmal) enthaltende organische Phase wird mithilfe des Tensids in der wässrigen Phase dispergiert.

Bevorzugt beträgt der Anteil des gelösten Polymers im organischen Lösungsmittel 1 bis 20%, insbesondere bevorzugt 3 bis 10%.

Bevorzugt beträgt der Anteil der organischen Phase 1 bis 60 Vol.-% des Phasengemischs, insbesondere bevorzugt 10 bis 30 Vol.-% . Bei kleineren Anteilen werden nur geringe Ausbeuten erzielt, bei größeren Anteilen wird die homogene Dispersion der organischen Phase erschwert, was sich jeweils mit Nachteil auf die Wirtschaftlichkeit des Verfahrens auswirkt.

Die Dispersion der organischen Phase in der wässrigen Phase erfolgt bevorzugt mechanisch, z.B. durch Rühren, Ultraschall oder spezielle Geräte zum gezielten Einbringen von Scherkräften. Bevorzugt werden Homogenisiersysteme wie z.B. sogenannte Homogenizer-Aggregate oder Rotor-Stator-Systeme wie z.B. Systeme des Typs Ultra-Turrax der Firma IKA verwendet.

Die Dispersion der organischen Phase in der wässrigen Phase kann einmalig oder kontinuierlich erfolgen. Bei einer einmaligen Dispergierung wird die Dispersion zum Start der Reaktion, z.B. durch kurze Behandlung mit einem Homogenisierungssystem, eingestellt, und wird im weiteren Verlauf z.B. nur noch durch ein zweites, nicht zur Dispersion geeignetes System gerührt bzw. durchmischt. Das Homogenisierungssystem wird also nur kurzzeitig eingesetzt, die Dispersion bleibt jedoch auch ohne weiteren Einsatz stabil. Bei einer kontinuierlichen Dispergierung wird das Homogenisierungssystem über die gesamte Reaktionszeit eingesetzt. Hier wird im Normalfall kein zweites System zum Rühren/Durchmischung der Reaktionslösung benötigt.

Beim Polymer des Hüllmaterials handelt es sich bevorzugt um stark vernetzte Duroplaste, besonders bevorzugt um Kondensationspolymere. Gemäß einer bevorzugten Ausführungsform besteht das Polymer des Hüllmaterials aus durch Kondensationsreaktionen polymerisierten Einheiten wie z.B. Aminoplasten und Phenoplasten, insbesondere bevorzugt aus Aminoplasten. Bevorzugt handelt es sich dabei um Melamin-Formaldehyd-Harze (MF), Melamin-Phenol-Formaldehyd-Harze (MPF), Phenol-Formaldehyd-Harze (PF), Harnstoff-Formaldehyd-Harze (UF), sowie damit verwandte Harztypen, z.B. Melamin-Guanidin-Formaldehyd-Harze oder Phenol-Resorcin-Formaldehyd-Harze. Gemäß einer weiteren bevorzugten Ausführungsform wird im Harzmaterial das Formaldehyd ganz oder teilweise durch ein anderes Aldehyd ersetzt, z.B. durch Furfural.

Gemäß einer weiteren bevorzugten Ausführungsform besteht das Polymer des Hüllmaterials aus Polyadditionsprodukten, bevorzugt Polyadditionsprodukte mit Isocyanat-haltigen Monomeren. Bevorzugt handelt es sich dabei um stark vernetzte Polyurethane (PU) und/oder Polyharnstoffe (PH).

Zur Erzeugung der Hülle wird bevorzugt ein wasserlösliches Präpolymerisat eingesetzt. Dabei können sowohl kommerziell erhältliche Präpolymerisate (z.B. Cymel 300 der Firma Allnex) oder aus den jeweiligen Einzelkomponenten, z.B. Melamin und Formaldehyd, durch Erhitzen in wässriger Lösung hergestellte Präpolymerisate eingesetzt werden.

Bevorzugt enthält das Präpolymerisat methylolisierte Amine, insbesondere bevorzugt methylolisiertes Melamin.

Das Präpolymerisat kann vor, während oder nach der Einbringung und Dispergierung der organischen Phase und der wässrigen Phase in die wässrige Phase eingebracht werden. Bevorzugt wird das Präpolymerisat nach Dispergierung der organischen Phase hinzugefügt, da hierdurch oft eine homogenere Tröpfchengröße der dispergierten Phase erreicht wird. Gemäß einem bevorzugten Anwendungsfall wird die gesamte benötigte Menge an Präpolymerisat auf einmal zugefügt.

Gemäß einem weiteren bevorzugten Anwendungsfall wird die benötigte Menge an Präpolymerisat portionsweise zugegeben, beispielsweise eine Hälfte zum Start der Reaktion und die zweite Hälfte nach Entfernen des organischen Lösemittels.

Gemäß einem weiteren bevorzugten Anwendungsfall wird das Präpolymerisat über die gesamte Reaktionszeit oder über Teile der Reaktionszeit kontinuierlich zugegeben, beispielsweise über eine elektronisch gesteuerte Dosierpumpe.

Die Zugabemengen und Zugabezeitpunkte können die Dichtigkeit der gebildeten Hülle beeinflussen, da z.B. durch eine portionsweise Zugabe Fehlstellen, welche in einem ersten Schritt der Hüllbildung entstanden sind, wieder verschlossen werden können und insgesamt ein kontrollierteres Wachstum der Schicht möglich wird. Insbesondere wird bevorzugt, dass ein Teil des Präpolymerisats erst hinzugefügt wird, nachdem das organische Lösemittel komplett entfernt wurde.

Wird das gesamte Präpolymerisat erst zugegeben, nachdem das organische Lösemittel entfernt wurde, erfolgt keine abdichtende Schichtbildung. Das Vorhandensein des organischen Lösemittels ist ein integraler Bestandteil für die Anlagerung der MF-Hülle, eine Anlagerung an "nacktes" bereits ausgefallenes Kernmaterial erfolgt nicht.

Um die Geschwindigkeit und das Ausmaß der Polymerisierung des Präpolymerisats zu steuern, wird der pH-Wert eingestellt. Die Einstellung kann am Anfang der Reaktion erfolgen und konstant bleiben oder kann stufenweise oder kontinuierlich verändert werden. Gemäß einer bevorzugten Ausführungsform wird der pH-Wert am Reaktionsanfang eingestellt und über die Reaktionszeit konstant belassen. Gemäß einer weiteren bevorzugten Ausführungsform wird der pH-Wert zu bestimmten Zeitpunkten des Reaktionsverlaufs angepasst, beispielsweise wird der pH-Wert am Anfang der Reaktion nicht angepasst, zu einem späteren Zeitpunkt durch Säurezugabe auf einen ersten Wert eingestellt und zu einem noch späteren Zeitpunkt durch weitere Säurezugabe auf einen zweiten Wert eingestellt. Gemäß einer weiteren bevorzugten Ausführungsform wird der pH-Wert kontinuierlich über den gesamten Reaktionsverlauf oder über Teile des Reaktionsverlaufs verändert, beispielsweise durch eine elektronisch gesteuerte Dosierpumpe, die eine Säurelösung in die Reaktionslösung dosiert.

Die Anpassung des pH-Werts erfolgt über Zugabe von Säuren oder Puffersystemen. Bevorzugt werden organische Säuren mit einem pKₛ-Wert in einem Bereich von 3,5 bis 5,5 eingesetzt, beispielsweise Essigsäure, oder Puffersysteme, die auf solchen Säuren und ihren Salzen beruhen, beispielsweise ein Ameisensäure-Formiat-Puffer.

Die Anpassung des pH-Werts erfolgt dabei bevorzugt innerhalb eines Bereichs von pH 7 bis pH 2, insbesondere bevorzugt pH 6 bis pH 3.

Unabhängig vom Reaktionsverlauf der Kondensationsreaktion der Hülle kann eine Absenkung des pH-Wertes (auch auf geringere Werte wie z.B. pH 1) am Ende der Reaktion erfolgen, um durch eine Agglomeration der Partikel die Aufarbeitung (Filtrierung) zu erleichtern.

Neben dem pH-Wert ist die Temperatur der Reaktionslösung ein wichtiger Steuerparameter sowohl für die Kondensationsreaktion des Hüllmaterials, als auch für das Entfernen des organischen Lösemittels. Gemäß einer bevorzugten Ausführungsform wird die Temperatur stufenweise erhöht, z.B. von Raumtemperatur nach einer gewissen Reaktionszeit auf 40°C und dann nach einer gewissen weiteren Reaktionszeit von 40°C auf 80°C. Gemäß einer weiteren bevorzugten Ausführungsform wird die Temperatur über die gesamte Reaktionszeit oder über Teile der Reaktionszeit kontinuierlich verändert.

Gemäß einer bevorzugten Ausführungsform wird die Temperatur zum Entfernen des organischen Lösemittels nahe am Siedepunkt des organischen Lösungsmittels gehalten. Bevorzugt ist die Haltetemperatur dabei nicht weniger als 10°C vom Siedepunkt des Lösemittels entfernt, besonders bevorzugt nicht weniger als 5°C. Bevorzugt befindet sich die Haltetemperatur jedoch nicht am oder über dem Siedepunkt des organischen Lösemittels, da hierdurch die Integrität der Hülle vermindert werden kann.

Gemäß einer bevorzugten Ausführungsform wird anstelle oder zusätzlich zur Erhöhung der Temperatur ein Unterdruck angelegt, um das Entfernen des organischen Lösemittels zu erreichen.

Gemäß einer bevorzugten Ausführungsform erfolgt das Entfernen des organischen Lösungsmittels ohne Anlegen von Unterdruck und ohne zusätzliche Temperaturerhöhung durch Rühren bei Raumtemperatur über einen gewissen Zeitraum.

Das Aushärten des Hüllmaterials findet bevorzugt im Temperaturbereich von 50°C bis 100°C statt, insbesondere bevorzugt im Temperaturbereich von 70 bis 80°C.

Bevorzugt findet die Entfernung des Lösemittels über einem Zeitraum von mindestens 20 Minuten statt, wobei der Zeitraum insbesondere bevorzugt mindestens 1h beträgt. Bevorzugt findet das Aushärten des Hüllmaterials bevorzugt über einem Zeitraum von mindestens 30 Minuten statt, wobei der Zeitraum insbesondere bevorzugt mindestens 1h beträgt.

Die Größe der resultierenden Kern-Hülle-Teilchen beträgt dabei zwischen 0,05 µm bis 100 µm, bevorzugt 0,1 µm bis 20 µm, weiter bevorzugt 0,5 µm bis 5 µm, insbesondere bevorzugt 1 µm bis 3 µm.

In einem bevorzugten Anwendungsfall werden Kern-Hülle-Teilchen mit einer dicken Hülle hergestellt, welche darauf ausgelegt ist das Kernmaterial möglichst effektiv zu schützen. Hier beträgt der Masseanteil der Hülle bevorzugt mehr als 20% der Masse des Kernmaterials, weiter bevorzugt mehr als 50% der Masse des Kernmaterials, insbesondere bevorzugt mehr als 100% der Masse des Kernmaterials.

In einem weiteren bevorzugten Anwendungsfall werden Kern-Hülle-Teilchen mit einer dünnen Hülle hergestellt, welche zwar ebenfalls zum Schutz beiträgt, jedoch für eine vollständige Stabilisierung des Partikels gegen Umwelteinflüsse nicht ausreicht. Hier ist die Rolle der Hülle zusätzlich die einer Vermittlerschicht, welche es erlaubt die Kern-Hülle-Partikel in Kunststoffe einzubetten. In diesem Fall beträgt der Masseanteil der Hülle bevorzugt weniger als 20% der Masse des Kernmaterials.

Durch die Einbettung in das Polymer wirkt das umgebende Polymer als zusätzlicher Schutz, so dass auch mit einer dünnen Hülle ausreichende Stabilitäten erreicht werden. Auf diese Art lassen sich z.B. lumineszierende Folienelemente wie Hologramme oder Sicherheitsfäden für Banknoten generieren welche gleichzeitig eine hohe Chemikalienstabilität und eine hohe Lumineszenzintensität besitzen. Die Hülle sorgt dabei für einen zusätzlichen Schutz im Vergleich zu "nackten" Kernpartikeln in Polymer und kann je nach verwendetem Einbettungs-Polymer auch die Dispersion in diesem Polymer begünstigen bzw. ein Auflösen der Kernpartikel im Polymer oder eine Diffusion des Merkmals aus dem Kern in das umgebende Polymer verhindern. In einer speziellen bevorzugten Ausführungsform ist die dünne Hülle in der Lage, sich kovalent mit dem umgebenden Polymer zu verbinden, wodurch sowohl eine feste Verankerung als auch eine bessere Dispersion im umgebenden Polymer erreicht werden kann.

Der Anteil des Merkmalstoffes am Kernmaterial beträgt bevorzugt zwischen 0,01 bis 100 Gewichtsprozent, weiter bevorzugt zwischen 0,1 bis 30 Gewichtsprozent, insbesondere bevorzugt zwischen 1 und 10 Gewichtsprozent.

Die erfindungsgemäßen Partikel schützen den darin enthaltenen Merkmalsstoff gegen schädliche äußere Einflüsse wie z.B. das Herauslösen durch organische Lösungsmittel oder die Zersetzung durch wässrige Säuren und Basen. Beispielsweise werden für gängige Lösungsmittel wie Aceton, Ethylacetat, Ethanol, Toluol etc. selbst nach über 1h Verweildauer der Partikel im Medium Retentionsraten von über 90% beobachtet. Eine äquivalente Probe ohne Duromer-Hülle zeigt hingegen z.B. im gleichen Lösungsmittel bereits nach einer Minute eine Retentionsrate von deutlich unter 10%, der Merkmalsstoff wird also herausgelöst.

Führt man einen qualitativen Stabilitätstest von Druckmustern aus, wird für sichtbare Effekte wie z.B. Lumineszenzpigmente oft eine Einteilung in die folgenden Stufen durchgeführt:
4: keine sichtbare Änderung
3: geringfügige Änderung
2: deutliche Änderung, weniger als 50% beschädigt
1: starke Änderung, mehr als 50% beschädigt
0: Element zerstört

Qualitativ erfolgt die Bewertung der Stabilität im Fall von im VIS absorbierenden oder lumineszierenden Merkmalstoffen anhand der oben genannten Stufen 0-4 durch Betrachtung des angeregten Andrucks mit dem Auge.
Quantitativ erfolgt die Bewertung durch maschinelle Vermessung, z.B. im Falle von Lumineszenz-basierten Merkmalsstoffen durch Vermessung des Emissionsspektrums mit Hilfe eines Fluoreszenzspektrometers oder im Falle von Absorptions-basierten Merkmalsstoffen durch Vermessung des Absorptionsspektrums mit Hilfe eines UV/VIS/NIR-Spektrometers.

Erfahrungsgemäß besitzen lumineszierende Andrucke mit der Stufe 4 ("keine sichtbare Änderung") eine nach dem Test verbleibende Lumineszenzintensität von über 80% bezogen auf die ursprüngliche Lumineszenzintensität. Analog wird für andere Merkmalsstoffe ebenfalls eine verbleibende Signalintensität von über 80% bezogen auf die ursprüngliche Signalintensität als äquivalent zu "Stufe 4" angesehen. Dies wird im Folgenden auch als eine Stabilität von über 80% bezeichnet.

Um die Stabilität der Sicherheitspigmente qualitativ und quantitativ beurteilen zu können, wird im Folgenden ein applikationsnahes Testverfahren beschrieben.

Testverfahren A5 bzw. A30:
- Einbringen der Sicherheitspigmente in einen Offset-Lack mit einer Pigmentierung von 15 Gewichtsprozent mit einem Dreiwalzenstuhl
- Andrucken der so erhaltenen Druckfarbe im Offsetdruck mit einem Andruckgewicht von 2 g/m² auf Werttitelpapier ("Banknotenpapier")
- Trocknen des Andrucks bei 60°C für 12h
- Eintauchen des Andrucks (bzw. eines abgeschnittenen Teils des Andrucks) in die jeweilige Testsubstanz, gegen welche die Stabilität des Andrucks ermittelt werden soll für einen Zeitraum von 5 Minuten (A5) bzw. 30 Minuten (A30)
- Entfernen des Andrucks aus der Testsubstanz und Abwaschen von anhaftender Testsubstanz mit Wasser
- Trocknen des Andrucks bei 60°C für 2h
- Die quantitative Stabilität des Andrucks gegen die Testsubstanz ergibt sich aus dem Vergleich der Signalintensität des Andrucks vor und nach Behandlung mit der Testsubstanz (bzw. dem Vergleich eines unbehandelten Teils des Andrucks mit einem behandelten Teil des gleichen Andrucks); Stabilität = (Intensität nach Behandlung mit Lösemittel) / (Intensität vor Behandlung mit Lösemittel)

Die Sicherheitspigmente auf Basis von Kern-Hülle-Teilchen der vorliegenden Erfindung erreichen in Andrucken dabei für applikationsrelevante Lösemittel, Säuren und Basen die höchste Stufe 4 oder eine Stabilität >80%, selbst wenn Andrucke des gleichen ungeschützten Merkmalstoffs nur die unterste Stufe 0 erreichen.

Gemäß einer bevorzugten Ausführungsform liegt die höchste Stabilitätsstufe "keine sichtbare Änderung" oder eine Stabilität >80%, bevorzugt >90% bei den folgenden applikationsrelevanten Lösungsmitteltests gemäß Testverfahren A5, besonders bevorzugt gemäß Testverfahren A30 vor:
Bestimmung der Stabilität gegen polare organische Lösemittel (Testsubstanz Ethylacetat), unpolare organische Lösemittel (Testsubstanz Toluol), wässrige Säuren (Testsubstanz HCl, 5 Gewichtsprozent), wässrige Basen (Testsubstanz NaOH, 2 Gewichtsprozent), sowie wässrige redox-aktive Lösungen (Testsubstanz Natriumhypochlorit-Lösung, 5% aktives Chlor). Dabei beträgt die Einwirkungsdauer 5 bzw. bevorzugt 30 Minuten, um sicherzustellen, dass ein ausreichender langer Kontakt zwischen Sicherheitspigment und Testsubstanz zu Stande kommt.

Gemäß einer weiteren bevorzugten Ausführungsform werden die genannten Stabilitäten ebenfalls für folgende applikationsrelevante Lösungsmittel erfüllt:
- Ethanol
- Trichlorethylen
- Tetrachlorethylen
- Xylol
- Leichtbenzin
- Natriumsulfit-Lösung (10 Gewichtsprozent)
- Schwefelsäure (2 Gewichtsprozent)
- Ammoniaklösung (10 Gewichtsprozent)

Gemäß einer bevorzugten Ausführungsform sind die Sicherheitspigmente selbst gegen besonders aggressive chemische Lösungsmittel für mindestens 5 Minuten stabil, z.B. Aceton. Insbesondere ist Aceton in der Lage, die meisten organischen Merkmalsstoffe des Stands der Technik anzugreifen.

Generell ist zu beachten, dass der für den Test verwendete Drucklack bzw. das Substrat auf dem aufgedruckt wird selbst im Test stabil sein muss, dies ist für die im Sicherheitsdruck von Wertdokumenten verwendeten Lacke und Substrate generell erfüllt. Die Stabilität des Drucklacks/Substrats lässt sich beispielsweise mit inerten Lumineszenzstoffen (z.B. anorganischen Phosphoren) oder inerten Absorberstoffen (z.B. anorganischen Farbpigmenten) prüfen.

Als Merkmalsstoffe eignen sich vor allem organische oder metallorganische Moleküle, die in unpolaren organischen Lösungsmitteln gelöst werden können. Die Einbringung von anorganischen Pigmentpartikeln oder Quantendots etc. ist schwierig und daher nicht bevorzugt.

Gemäß einer bevorzugten Ausführungsform handelt es sich bei dem Merkmalsstoff um einen Lumineszenzfarbstoff. Gemäß einer bevorzugten Ausführungsform handelt es sich bei dem Lumineszenzfarbstoff um einen Fluoreszenzfarbstoff. Gemäß einer weiteren bevorzugten Ausführungsform handelt es sich bei dem Lumineszenzfarbstoff um einen Phosphoreszenzfarbstoff. Gemäß einer weiteren bevorzugten Ausführungsform handelt es sich bei dem Lumineszenzfarbstoff um einen im UV-Bereich anregbaren Lumineszenzfarbstoff, welcher im sichtbaren Spektralbereich emittiert. Gemäß einer weiteren bevorzugten Ausführungsform handelt es sich um einen im sichtbaren Spektralbereich anregbaren Lumineszenzfarbstoff, welcher im sichtbaren Spektralbereich emittiert. Gemäß einer weiteren bevorzugten Ausführungsform handelt es sich um einen im Infrarot-Bereich emittierenden Lumineszenzfarbstoff. Bei den Farbstoffen kann es sich sowohl um rein organische Moleküle, als auch um metallorganische Komplexe handeln.

Gemäß einer bevorzugten Ausführungsform werden zwei oder mehr fluoreszierende oder phosphoreszierende Lumineszenzfarbstoffe gemischt, um ein Energietransfersystem bzw. FRET-System zu erstellen, in welchem der erste Lumineszenzfarbstoff nach Anregung seine Anregungsenergie partiell oder vollständig an den zweiten Lumineszenzfarbstoff abgeben kann. Im Falle eines derartigen FRET-Systems ist einer der beteiligten Lumineszenzfarbstoffe bevorzugt im UV-Bereich anregbar und emittiert im sichtbaren Spektralbereich, während der andere Lumineszenzfarbstoff im sichtbaren Spektralbereich anregbar ist und im sichtbaren Spektralbereich emittiert.

Beispiele für Stoffklassen von UV-anregbaren bzw. im sichtbaren Spektralbereich anregbaren Lumineszenzfarbstoffen, welche im sichtbaren Spektralbereich emittieren, sind rein organische Lumineszenzfarbstoffe und lumineszierende Metallkomplexe. Mögliche Farbstoffklassen sind zum Beispiel Diarylpolyene, Diarylethene, Arylacetylene, Oxazole, Pyrazole, Benzazole, Anthrone, Chinone, Cyanine, Rhodamine, Oxazine, Phenoxazine, Thiazine, Phenothiazine, Perylene, Terylene, Coumarine, Benzoxazinone oder Benzothiazinone sowie Seltenerdmetallkomplexe, wie z.B. β-Diketonat-Seltenerdmetallkomplexe oder Dipicolinat-Seltenerdmetallkomplexe, dabei bevorzugt neutral geladene Seltenerdmetallkomplexe. Andere organische Lumineszenzfarbstoffklassen sind ebenfalls einsetzbar.
Insbesondere werden als Farbstoffklasse für im sichtbaren Spektralbereich anregbare Lumineszenzfarbstoffe welche im Sichtbaren emittieren aufgrund ihrer hohen Lichtstabilität bevorzugt Perylenfarbstoffe eingesetzt.

Beispiele für geeignete im Infrarot emittierende Lumineszenzfarbstoffe sind organische Fluoreszenzfarbstoffe oder lumineszierende Metallkomplexe wie IR-1048, Cy7 oder Nd(TTA)₃ (Neodym-tris-thenoyltrifluoroacetonat).

Beispiele für FRET-Systeme sind z.B. Mischungen aus einem grün-gelb anregbaren Fluoreszenzfarbstoff und einem grün-gelb emittierenden Fluoreszenzfarbstoff, beispielsweise eine Mischung mit einem Gewichtsverhältnis von 1:15 aus 2,9-Bis(2,6-diisopropylphenyl)anthra[2,1,9-def:6,5,10-d'e'f]diisochinolin-1,3,8,10(2H,9H)-tetraon (C₄₈H₄₂N₂O₄, ein grün anregbarer Perylenfarbstoff welcher eine orange Lumineszenzemission besitzt, im weiteren "F-Orange" genannt) und N-(2-(4-oxo-4H-benzo[d][1,3]oxazin-2-yl)phenyl)naphthalen-2-sulfonamid (C₂₄H₁₆N₂O₄S, ein UV-anregbarer Lumineszenzfarbstoff welcher eine grüne Lumineszenzemission besitzt, im weiteren "F-Grün" genannt).

Ein FRET-System kann auch dazu dienen, eine forensische Komponente in einem Lumineszenzpigment auszulesen. So kann der Akzeptor-Farbstoff nicht nur durch einen Energietransfer des Donorfarbstoffes angeregt werden, sondern auch eine direkte Anregung des Akzeptorfarbstoffes kann zu dessen Lumineszenz führen. Beispielsweise kann eine Mischung aus F-Orange und F-Grün einerseits im UV-A-Bereich, z.B. bei 365 nm, angeregt werden (Anregung des F-Grün gefolgt von Energieübertrag auf F-Orange). Andererseits kann für einen forensischen Test auch das F-Orange direkt angeregt werden, beispielsweise durch Licht der Wellenlänge 525 nm. Die direkte Anregung des Akzeptorstoffes kann somit verwendet werden, um FRET-Systeme von anderen Farbstoffsystemen zu unterscheiden, und bietet eine zusätzliche Sicherheitsstufe, die z.B. in einem Labor oder automatisch von Sensoren ausgewertet werden kann.

Gemäß einer bevorzugten Ausführungsform enthält das Lumineszenzpigment daher ein Energietransfersystem (FRET-System), bevorzugt ein FRET-System aus einem UV-anregbaren Lumineszenzfarbstoff als Donor und einem im sichtbaren Bereich anregbaren Lumineszenzfarbstoff als Akzeptor. Bevorzugt handelt es sich bei dem Akzeptor um einen Perylenfarbstoff. Bevorzugt wird der Akzeptor als forensischer Marker verwendet.

Bevorzugt handelt es sich bei dem Merkmalsstoff um einen Infrarotabsorber. Besonders bevorzugt weist der Infrarotabsorber im sichtbaren Spektralbereich keine oder nur eine geringe Absorption auf. Gemäß einer bevorzugten Ausführungsform sind die Absorber schmalbandig (z.B. mit einem FWHM (Halbwertsbreite, "full width at half maximum") von weniger als 200 nm) oder scharfbandig (z.B. mit einem FWHM von weniger als 30 nm) und absorbieren damit in einem engen Spektralbereich. Gemäß einer weiteren bevorzugten Ausführungsform absorbieren die Absorber breitbandig (z.B. mit einem FWHM von mehr als 200 nm). Gemäß einer bevorzugten Ausführungsform liegt das Absorptionsmaximum des Infrarotabsorbers im Bereich von 700 nm bis 900 nm, bevorzugt in einem Bereich von 700 nm bis 800 nm, und ist damit geeignet, um über Standard-Infrarotsensoren für Banknoten ausgelesen zu werden. Gemäß einer weiteren bevorzugten Ausführungsform liegt das Absorptionsmaximum des Infrarotabsorbers oberhalb von 900 nm, weiter bevorzugt oberhalb von 950 nm, insbesondere bevorzugt im Bereich von 1000 nm bis 1100 nm, und wird dadurch von Standard-Infrarotsensoren für Banknoten nicht erfasst, kann jedoch durch spezielle Infrarotsensoren für Banknoten erfasst werden.

Gemäß einer bevorzugten Ausführungsform liegt das Absorptionsmaximum oder eine starke Absorptionsbande des UV-Absorbers im UV-A-Bereich von 315 nm bis 380 nm, insbesondere bevorzugt im Bereich von 350 nm bis 380 nm. Gemäß einer weiteren bevorzugten Ausführungsform liegt das Absorptionsmaximum oder eine starke Absorptionsbande des UV-Absorbers im UV-B/C-Bereich von 200 nm bis 315 nm, weiter bevorzugt von 220 nm bis 290 nm, insbesondere bevorzugt von 240 nm bis 270 nm.

Geeignete Infrarotabsorber sind beispielsweise kommerziell bei der Firma Fujifilm Imaging Colorants (z.B. CKK-55), der Firma BASF (z.B. Lumogen IR-Absorber) oder der Firma Epolin unter dem Markennamen Epolight erhältlich. Beispielsweise absorbiert Epolight 4101 schmalbandig bei 739 nm und zeigt bei verdünnter Einbringung in ein Polymer keine merkliche Eigenfarbe. Ebenso absorbiert beispielsweise Epolight 4831 schmalbandig bei 1000 nm und zeigt bei verdünnter Einbringung in ein Polymer keine merkliche Eigenfarbe.

Geeignete UV-Absorber sind beispielsweise bei der Firma BASF unter den Markennamen Tinuvin und Chimassorb erhältlich. Beispielsweise besitzt Tinuvin 326 eine starke Absorptionsbande bei 360 nm und Chimassorb 81 eine starke Absorptionsbande bei 330 nm.

Gemäß einer bevorzugten Ausführungsform handelt es sich bei dem Merkmalsstoff um einen schaltbaren Farbstoff. Bevorzugt handelt es sich um einen thermochromen oder photochromen Farbstoff. Gemäß einer bevorzugten Ausführungsform handelt es sich bei dem schaltbaren Farbstoff um eine photochrome Verbindung. Bevorzugt handelt es sich um eine photochrome Verbindung, die zwischen einem ersten sichtbaren Zustand und einem zweiten sichtbaren oder unsichtbaren Zustand schaltbar ist. Bevorzugt wird der Schaltvorgang in eine Richtung durch Bestrahlung mit UV-Licht durchgeführt, während das Rückschalten entweder von alleine (thermisch) oder durch Bestrahlung mit sichtbarem Licht erfolgt.

Gemäß einer bevorzugten Ausführungsform sind die photochromen Farbstoffe ebenfalls Lumineszenzfarbstoffe. Dabei können beide oder nur einer der Schaltungszustände des Farbstoffs zur Lumineszenz fähig sein. Die verschiedenen Schaltungszustände können identische Lumineszenzeigenschaften besitzen (z.B. Emission bei der gleichen Wellenlänge) oder verschiedene Lumineszenzeigenschaften besitzen (z.B. Wechsel der Emissionswellenlänge nach Schaltvorgang).

Gemäß einer bevorzugten Ausführungsform befindet sich die durch den Schaltvorgang erzeugte Absorptionsbande oder Emissionsbande, insbesondere die erzeugte Absorptionsbande, im sichtbaren Spektralbereich. Gemäß einer weiteren bevorzugten Ausführungsform befindet sich die durch den Schaltvorgang erzeugte Absorptionsbande oder Emissionsbande im Infrarotbereich, z.B. in einem Bereich von 700 nm bis 900 nm.

Beispiele für geeignete thermochrome Farbstoffe sind beispielsweise (a) organische Moleküle, welche bei Wechsel der Temperatur durch Strukturänderung ihre Farbe ändern, wie 9,9'-Bixanthyliden und 10,10'-Bianthronyliden; (b) Kombinationen aus einem Leucofarbstoff (z.B. Spirolactone, Spiropyrane) und einem reversiblen Protonendonor (z.B. Bisphenol A, 1,2,3-Triazole) und einem Phasenwechselmaterial (z.B. Paraffin), welche bei Wechsel der Temperatur durch Protonierung/Deprotonierung des Leucofarbstoffs die Farbe wechseln; (c) Farbstoffe oder Metallkomplexe, welche ihre Farbintensität temperaturabhängig verändern, z.B. Temperatur-Quenching bei Europiumkomplexen; und (d) Kombinationen aus mehreren Farbstoffen mit unterschiedlichem Temperaturverhalten (z.B. einer Mischung aus Terbium- und Europiumkomplexen, wie sie u.a. in der Schrift EP 0256922 B1 beschrieben wird, welche temperaturabhängig rot oder grün lumineszieren kann).

Hierbei sind (a) und (d) aufgrund des klaren Farbwechsels bevorzugt und (b) aufgrund der Komplexität und schwierigen Umsetzung weniger bevorzugt.

Beispiele für geeignete photochrome Farbstoffe sind beispielsweise Spiropyrane, Stilbene/Azastilbene, Triarylmethane, Nitrone, Fulgide, Naphthopyrane, Spirooxazine, Quinone und Diarylethene. Aufgrund ihrer hohen Lichtstabilität sind Diarylethene bevorzugt. Beispielsweise absorbiert das Diarylethen BTF6 (=1,2-bis(2-methyl-1-benzothiophen-3-yl)perfluorocyclopenten) in der offenen Ringstruktur im UV-Bereich bei 200 nm bis 300 nm und besitzt keine merklichen Absortionsbanden im sichtbaren Spektralbereich, ist also farblos. Nach Bestrahlung mit UV-Licht der Wellenlänge 254 nm wandelt es sich jedoch in die geschlossene Ringstruktur um, welche eine Absorptionsbande im sichtbaren Spektralbereich bei 530 nm aufweist, also farbig ist. Bei Anregung mit UV-Licht der Wellenlänge 315 nm emittieren sowohl die geschlossene, als auch die offene Ringstruktur bei 450 nm, es handelt sich also gleichzeitig um einen Lumineszenzfarbstoff.

Durch Abwarten (thermisch) oder Bestrahlung mit sichtbarem Licht, z.B. Licht der Wellenlänge 400 nm, lässt sich die geschlossene Ringstruktur wieder in die offene Ringstruktur zurückführen.

Weiterhin ist es möglich, durch gezielte Kombination (bzw. gemeinsame Verkapselung) unterschiedlicher Merkmalstoffe komplexere Codierungen zu erzeugen und Merkmalspartikel zu erzeugen, die für unterschiedliche maschinenlesbare Nachweisverfahren gleichzeitig geeignet sind.

Zusätzlich zum Merkmalsstoff können dem Kernmaterial oder Hüllmaterial, bevorzugt dem Kernmaterial, weitere Additive zugesetzt werden.

Gemäß einer bevorzugten Ausführungsform werden den Polymerpartikeln sogenannte Weichmacher zugesetzt, beispielsweise Diethylhexyladipat, Dibutylphthalat oder Diisononylphthalat. Als Stoffklassen können hier Dieester der Phtalsäure, Dieester der Adipinsäure und Dieester der Sebacinsäure mit längerkettigen Monoalkoholen (2-Ethylhexanol, Isononanol, Decylalkohol, Fettalkohole, Benzylalkohol, Glykolether), Triester der Citronensäure, Phosphorsäureester längerkettiger aliphatischer Alkohole, Dibenzoesäureester von aliphatischen Alkoholen, Ester von Fettsäuren mit aliphatischen Alkoholen, Diester von Polyethylenglykolethern, Ester von Harzsäuren mit längerkettigen, aliphatischen Alkoholen, Weichmacher auf Basis epoxidierter Fettsäureester oder epoxidierter Öle, Kohlenstoffweichmacher und chlorierte Paraffine eingesetzt werden. Hierdurch können die mechanischen Eigenschaften des Polymerkerns angepasst werden. Insbesondere kann die Aufnahmefähigkeit des Kernmaterials für bestimmte Merkmalsstoffe erhöht werden.

Bevorzugt werden relativ zur Masse des Kernmaterials 0,1 bis 5 Gewichtsprozent Weichmacher zugesetzt, weiter bevorzugt 0,2 bis 2 Gew.-%, insbesondere bevorzugt 0,3 bis 0,6 Gew.-%.

Gemäß einer weiteren bevorzugten Ausführungsform werden dem Kernmaterial UV-Absorber zugesetzt. Hierdurch kann z.B. die Lichtechtheit des Merkmalstoffes verbessert werden.

Geeignete UV-Absorber sind beispielsweise von der Firma BASF unter dem Markennamen Tinuvin und Chimassorb erhältlich, beispielsweise Chimassorb 81.

Gemäß einer weiteren bevorzugten Ausführungsform werden dem Kernmaterial Farbstoffe zugefügt. Hierdurch kann z.B. die Eigenfärbung der Kapseln angepasst werden (z.B. rot oder blau). Ebenso können Farbstoffe verwendet werden, um Anregungs- oder Emissionsspektren der Merkmalstoffe zu modulieren.

Die Sicherheitspigmente werden bevorzugt für die Herstellung von Wertdokumenten verwendet. Dies geschieht bevorzugt in Form einer Druckfarbe, insbesondere für Offsetdruck, Siebdruck oder Stahlstichtiefdruck. Anstatt die Pigmente direkt in den Drucklack bzw. die Druckfarbe einzuarbeiten kann aus den Pigmenten auch zuerst ein Farbkonzentrat hergestellt werden. Diese hat z.B. einem Pigmentanteil von 50% und kann später in den Drucklack bzw. die Druckfarbe eingearbeitet werden. Dies hat anwendungstechnische Vorteile wie z.B. eine schnellere Einarbeitung oder das Vermeiden von Stauben bei der Einarbeitung.

Alternativ können die Sicherheitspigmente auch in eine Polymermasse eingearbeitet werden, bevorzugt um ein Masterbatch zu erzeugen, oder ein Wertdokument-Substrat, eine Sicherheitsfolie, eine Melierfaser oder einen Sicherheitsfaden herzustellen. Dies kann beispielsweise durch Extrusion erfolgen.

Die Erfindung wird nachstehend anhand von Ausführungsbeispielen näher beschrieben.

### Ausführungsbeispiel 1: Blaues Lumineszenzpigment

2,7 g Polystyrol der mittleren Molmasse 100000 g/mol, 150 mg 4,4'-Bis(2-methoxystyryl)-1,1'-biphenyl (C₃₀H₂₆O₂) und 25 mg Dibutylphthalat werden unter Rühren in 50 g Dichlormethan gelöst (Lösung 1A).
7,8 g Melamin und 11,1 g Paraformaldehyd werden in 100 g Wasser bei 60°C für 60 Minuten gerührt, wobei sich eine klare Lösung bildet. Die Lösung wird über ein Filterpapier filtriert um eventuell vorhandene nicht aufgelöste Partikel zu entfernen (Lösung 1B).
In 247,5 g Wasser werden 2,5 g Teepol 610 S (Sigma Aldrich) gelöst (Lösung 1C).
Lösung 1A wird zu Lösung 1C gegeben und 30 Sekunden mit einem Dispergierwerkzeug (Ultraturrax) dispergiert. Während dieser Zeit werden 20 mL Lösung 1B und 1 mL Essigsäure zugegeben. Anschließend wird die Dispersion mit einem Magnetrührer weiter gerührt.
Nach 2 h Rühren bei Raumtemperatur wird die Dispersion auf 39°C erhitzt und 1,5 h bei dieser Temperatur gehalten, um das Dichlormethan zu verdampfen. Anschließend werden weitere 20 mL der Lösung 1B zugegeben und die Temperatur auf 70°C erhöht. Diese Temperatur wird weitere 1,5 h gehalten. Die erhaltenen Partikel werden von der Lösung separiert, mit Wasser gewaschen und bei 60°C getrocknet.
Die Partikel werden mit einem Dreiwalzenstuhl zu einem Gewichtsanteil von 15% in einen Offsetlack (Sicpa Holding SA) eingebracht. Der Lack wird mit einer Andruckstärke von 2 g/m² auf einen Andruckstreifen gedruckt. Bei Bestrahlung mit UV-Licht der Wellenlänge 365 nm luminesziert der zuvor farblose Andruck blau.
Der Andruck zeigt eine hohe Stabilität gegen organische Lösemittel sowie wässrige Säuren und Basen (Erreichen der Stufe 4 "keine sichtbare Änderung"), während Andrucke des reinen Farbstoffs nicht beständig sind.

Die quantitative Bestimmung der Stabilität gegen polare organische Lösemittel (Testsubstanz Ethylacetat), unpolare organische Lösemittel (Testsubstanz Toluol), wässrige Säuren (Testsubstanz HCl, 5 Gewichtsprozent), wässrige Basen (Testsubstanz NaOH, 2 Gewichtsprozent), sowie wässrige redox-aktive Lösungen (Testsubstanz Natriumhypochlorit-Lösung, 5% aktives Chlor) nach Testverfahren A30 sowie Aceton nach Testverfahren A5 liefert jeweils eine Stabilität von mehr als 95%.

### Ausführungsbeispiel 2: Gelbes Lumineszenzpigment

2,7 g Polymethylmethacrylat (PMMA) der mittleren Molmasse 80000 g/mol, 150 mg N-(2-(4-oxo-4H-benzo[d] [l,3]oxazin-2-yl)phenyl)naphthalen-2-sulfonamid (C₂₄H₁₆N₂O₄S) und 10 mg 2,9-Bis(2,6-diisopropylphenyl)anthra[2,1,9-def:6,5,10-d'e'f']diisochinolin-1,3,8,10(2H,9H)-tetraon (C₄₈H₄₂N₂O₄) werden unter Rühren in 50 g Chloroform gelöst (Lösung 2A).
7,8 g Melamin und 11,1 g Paraformaldehyd werden in 100 g Wasser bei 60°C für 60 Minuten gerührt, wobei sich eine klare Lösung bildet. Die Lösung wird über ein Filterpapier filtriert um eventuell vorhandene nicht aufgelöste Partikel zu entfernen (Lösung 2B).
In 247,5 g Wasser werden 2,5 g Natriumdodecylsulfat gelöst (Lösung 2C).
Lösung A wird zu Lösung 2C gegeben und 30 Sekunden mit einem Dispergierwerkzeug (Ultraturrax) dispergiert. Während dieser Zeit werden 20 mL Lösung 2B und 1 mL Essigsäure zugegeben. Anschließend wird die Dispersion mit einem Magnetrührer weiter gerührt.
Die Dispersion wird 12h bei Raumtemperatur gerührt um das Chloroform zu verdampfen. Anschließend werden weitere 20 mL der Lösung 2B zugegeben und die Temperatur auf 70°C erhöht. Diese Temperatur wird weitere 2 h gehalten. Die erhaltenen Partikel werden von der Lösung separiert, mit Wasser gewaschen und bei 60°C getrocknet.
Die Partikel werden mit einem Dreiwalzenstuhl zu einem Gewichtsanteil von 15% in einen Offsetlack (hubergroup Deutschland GmbH) eingebracht.
Der Lack wird mit einer Andruckstärke von 2 g/m² auf einen Andruckstreifen gedruckt.
Bei Bestrahlung mit UV-Licht der Wellenlänge 365 nm luminesziert der zuvor zart orange gefärbte Andruck gelb.
Der Andruck zeigt eine hohe Stabilität gegen organische Lösemittel sowie wässrige Säuren und Basen (Erreichen der Stufe 4 "keine sichtbare Änderung"), während Andrucke des reinen Farbstoffs nicht beständig sind.

Die quantitative Bestimmung der Stabilität gegen polare organische Lösemittel (Testsubstanz Ethylacetat), unpolare organische Lösemittel (Testsubstanz Toluol), wässrige Säuren (Testsubstanz HCl, 5 Gewichtsprozent), wässrige Basen (Testsubstanz NaOH, 2 Gewichtsprozent), sowie wässrige redox-aktive Lösungen (Testsubstanz Natriumhypochlorit-Lösung, 5% aktives Chlor) nach Testverfahren A30 sowie Aceton nach Testverfahren A5 liefert jeweils eine Stabilität von mehr als 95%.

### Ausführungsbeispiel 3: IR-Absorberpigment

2,7 g Polystyrol der mittleren Molmasse 192000 g/mol und 150 mg IR-Absorber CKK-55 (Fujifilm Imaging Colorants) werden unter Rühren in 50 g Chloroform gelöst (Lösung 3A).
7,8 g Melamin und 11,1 g Paraformaldehyd werden in 100 g Wasser bei 60°C für 60 Minuten gerührt, wobei sich eine klare Lösung bildet. Die Lösung wird über ein Filterpapier filtriert um eventuell vorhandene nicht aufgelöste Partikel zu entfernen (Lösung 3B).
In 247,5 g Wasser werden 2,5 g Teepol 610 S (Sigma Aldrich) gelöst (Lösung 3C).
Lösung 3A wird zu Lösung 3C gegeben und 30 Sekunden mit einem Dispergierwerkzeug (Ultraturrax) dispergiert. Während dieser Zeit werden 20 mL Lösung 3B und 1 mL Essigsäure zugegeben. Anschließend wird die Dispersion mit einem Magnetrührer weiter gerührt.
Nach 2 h Rühren bei Raumtemperatur wird die Dispersion auf 39°C erhitzt und 1,5 h bei dieser Temperatur gehalten, um das Chloroform zu verdampfen. Anschließend werden weitere 20 mL der Lösung 3B zugegeben und die Temperatur auf 70°C erhöht. Diese Temperatur wird weitere 1,5 h gehalten. Die erhaltenen Partikel werden von der Lösung separiert, mit Wasser gewaschen und bei 60°C getrocknet.
Die Partikel werden mit einem Dreiwalzenstuhl zu einem Gewichtsanteil von 15% in eine wasserbasierte Siebdruckfarbe (Pröll KG) eingebracht. Der Lack wird mit einer Andruckstärke von 6 g/m² auf einen Andruckstreifen gedruckt.
Der Andruck zeigt eine Absorptionsbande im NIR-Bereich bei 850 nm.
Der Andruck zeigt eine hohe Stabilität gegen organische Lösemittel sowie wässrige Säuren und Basen (Verringerung der Absorptionsbande bei 850 nm um weniger als 5%), während Andrucke des reinen Absorbers nicht beständig sind.

Die quantitative Bestimmung der Stabilität gegen polare organische Lösemittel (Testsubstanz Ethylacetat), unpolare organische Lösemittel (Testsubstanz Toluol), wässrige Säuren (Testsubstanz HCl, 5 Gewichtsprozent), wässrige Basen (Testsubstanz NaOH, 2 Gewichtsprozent), sowie wässrige redox-aktive Lösungen (Testsubstanz Natriumhypochlorit-Lösung, 5% aktives Chlor) nach Testverfahren A30 sowie Aceton nach Testverfahren A5 liefert jeweils eine Stabilität von mehr als 95%.

### Ausführungsbeispiel 4: Photochromes Pigment

2,7 g Polymethylmethacrylat (PMMA) der mittleren Molmasse 100000 g/mol und 150 mg Cis-1,2-dicyano-1,2-bis(2,4,5-trimethyl-3-thienyl)ethen (C₁₈H₁₈N₂S₂) werden unter Rühren in 50 g Dichlormethan gelöst (Lösung 4A).
7,8 g Melamin und 11,1 g Paraformaldehyd werden in 100 g Wasser bei 60°C für 60 Minuten gerührt, wobei sich eine klare Lösung bildet. Die Lösung wird über ein Filterpapier filtriert um eventuell vorhandene nicht aufgelöste Partikel zu entfernen (Lösung 4B).
In 247,5 g Wasser werden 2,5 g Natriumdodecylsulfat gelöst (Lösung 4C). Lösung 4A wird zu Lösung 4C gegeben und 30 Sekunden mit einem Dispergierwerkzeug (Ultraturrax) dispergiert. Während dieser Zeit werden 20 mL Lösung 4B und 1 mL Essigsäure zugegeben. Anschließend wird die Dispersion mit einem Magnetrührer weiter gerührt.
Die Dispersion wird 30 Minuten gerührt und anschließend bei 500 mbar Unterdruck für 1 h gerührt um das Dichlormethan zu verdampfen. Anschließend werden weitere 20 mL der Lösung 4B zugegeben und die Temperatur auf 70°C erhöht. Diese Temperatur wird weitere 1,5 h gehalten. Die erhaltenen Partikel werden von der Lösung separiert, mit Wasser gewaschen und bei 60°C getrocknet.
Die Partikel werden mit einem Dreiwalzenstuhl zu einem Gewichtsanteil von 15% in einen Offsetlack (Sicpa Holding SA) eingebracht. Der Lack wird mit einer Andruckstärke von 2 g/m² auf einen Andruckstreifen gedruckt. Bei Bestrahlung mit UV-Licht der Wellenlänge 330 nm wechselt der Andruck die Farbe von farblos nach rot, und färbt sich thermisch oder durch Bestrahlung mit sichtbarem Licht (z.B. der Wellenlänge 520 nm) wieder zurück.
Der Andruck zeigt eine hohe Stabilität gegen organische Lösemittel sowie wässrige Säuren und Basen (Erreichen der Stufe 4 "keine sichtbare Änderung"), während Andrucke des reinen Farbstoffs nicht beständig sind.

Die quantitative Bestimmung der Stabilität gegen polare organische Lösemittel (Testsubstanz Ethylacetat), unpolare organische Lösemittel (Testsubstanz Toluol), wässrige Säuren (Testsubstanz HCl, 5 Gewichtsprozent), wässrige Basen (Testsubstanz NaOH, 2 Gewichtsprozent), sowie wässrige redox-aktive Lösungen (Testsubstanz Natriumhypochlorit-Lösung, 5% aktives Chlor) nach Testverfahren A30 sowie Aceton nach Testverfahren A5 liefert jeweils eine Stabilität von mehr als 95%.

### Ausführungsbeispiel 5: Rotes Lumineszenzpigment

2,7 g Polymethylmethacrylat (PMMA) der mittleren Molmasse 80000 g/mol und 150 mg Eu(TTA)₃(TPPO)₂ (TTA = Thenoyltrifluoroaceton; TPPO = Triphenylphosphinoxid) werden unter Rühren in 50 g Dichlormethan gelöst (Lösung 5A).
7,8 g Melamin und 11,1 g Paraformaldehyd werden in 100 g Wasser bei 60°C für 60 Minuten gerührt, wobei sich eine klare Lösung bildet. Die Lösung wird über ein Filterpapier filtriert um eventuell vorhandene nicht aufgelöste Partikel zu entfernen (Lösung 5B).
In 247,5 g Wasser werden 2,5 g Natriumdodecylsulfat gelöst (Lösung 5C). Lösung 5A wird zu Lösung 5C gegeben und 30 Sekunden mit einem Dispergierwerkzeug (Ultraturrax) dispergiert. Während dieser Zeit werden 20 mL Lösung 5B und 1 mL Essigsäure zugegeben. Anschließend wird die Dispersion mit einem Magnetrührer weiter gerührt.
Die Dispersion wird 30 Minuten gerührt und anschließend bei 500 mbar Unterdruck für 1 h gerührt um das Dichlormethan zu verdampfen. Anschließend werden weitere 20 mL der Lösung 5B zugegeben und die Temperatur auf 70°C erhöht. Diese Temperatur wird weitere 1,5 h gehalten. Die erhaltenen Partikel werden von der Lösung separiert, mit Wasser gewaschen und bei 60°C getrocknet.
Die Partikel werden mit einem Dreiwalzenstuhl zu einem Gewichtsanteil von 15% in einen Offsetlack (Sicpa Holding SA) eingebracht. Der Lack wird mit einer Andruckstärke von 2 g/m² auf einen Andruckstreifen gedruckt. Bei Bestrahlung mit UV-Licht der Wellenlänge 365 nm luminesziert der zuvor farblose Andruck rot.
Der Andruck zeigt eine hohe Stabilität gegen organische Lösemittel sowie wässrige Säuren und Basen (Erreichen der Stufe 4 "keine sichtbare Änderung"), während Andrucke des reinen Farbstoffs nicht beständig sind.

Die quantitative Bestimmung der Stabilität gegen polare organische Lösemittel (Testsubstanz Ethylacetat), unpolare organische Lösemittel (Testsubstanz Toluol), wässrige Säuren (Testsubstanz HCl, 5 Gewichtsprozent), wässrige Basen (Testsubstanz NaOH, 2 Gewichtsprozent), sowie wässrige redox-aktive Lösungen (Testsubstanz Natriumhypochlorit-Lösung, 5% aktives Chlor) nach Testverfahren A30 sowie Aceton nach Testverfahren A5 liefert jeweils eine Stabilität von mehr als 95%.

### Ausführungsbeispiel 6: UV-Absorberpigment mit blauer Eigenfarbe

2,7 g Polystyrol der mittleren Molmasse 192000 g/mol, 100 mg Sudanblau II (1,4-Bis-(butylamino)-antrachinon, C₂₂H₂₆N₂O₂) und 50 mg 2-Hydroxy-4-(octyloxy)benzophenon (CH₃(CH₂)₇OC₆H₃(OH)COC₆H₅) werden unter Rühren in 50 g Ethylacetat gelöst (Lösung 6A).
7,8 g Melamin und 11,1 g Paraformaldehyd werden in 100 g Wasser bei 60°C für 60 Minuten gerührt, wobei sich eine klare Lösung bildet. Die Lösung wird über ein Filterpapier filtriert um eventuell vorhandene nicht aufgelöste Partikel zu entfernen (Lösung 6B).
In 247,5 g Wasser werden 2,5 g Teepol 610 S (Sigma Aldrich) gelöst (Lösung 6C).
Lösung 6A wird zu Lösung 6C gegeben und 30 Sekunden mit einem Dispergierwerkzeug (Ultraturrax) dispergiert. Während dieser Zeit werden 20 mL Lösung 6B und 1 mL Essigsäure zugegeben. Anschließend wird die Dispersion mit einem Magnetrührer weiter gerührt.
Die Dispersion wird 12h bei Raumtemperatur gerührt um das Ethylacetat zu verdampfen. Anschließend werden weitere 20 mL der Lösung 6B zugegeben und die Temperatur auf 70°C erhöht. Diese Temperatur wird weitere 1,5 h gehalten. Die erhaltenen Partikel werden von der Lösung separiert, mit Wasser gewaschen und bei 60°C getrocknet.
Die Partikel werden mit einem Dreiwalzenstuhl zu einem Gewichtsanteil von 15% in eine wasserbasierte Siebdruckfarbe (Pröll KG) eingebracht. Der Lack wird mit einer Andruckstärke von 6 g/m² auf einen Andruckstreifen gedruckt.

Der Andruck ist blau und zeigt eine Absorptionsbande im UV-Bereich bei 280-350 nm.
Der Andruck zeigt eine hohe Stabilität gegen organische Lösemittel sowie wässrige Säuren und Basen (Verringerung der Absorptionsbanden im sichtbaren bzw. im UV-Bereich um weniger als 10%), während Andrucke des reinen Absorbers bzw. Farbstoffs nicht beständig sind.

Die quantitative Bestimmung der Stabilität gegen polare organische Lösemittel (Testsubstanz Ethylacetat), unpolare organische Lösemittel (Testsubstanz Toluol), wässrige Säuren (Testsubstanz HCl, 5 Gewichtsprozent), wässrige Basen (Testsubstanz NaOH, 2 Gewichtsprozent), sowie wässrige redox-aktive Lösungen (Testsubstanz Natriumhypochlorit-Lösung, 5% aktives Chlor) nach Testverfahren A30 sowie Aceton nach Testverfahren A5 liefert jeweils eine Stabilität von mehr als 95%.

## Patentansprüche

1. Verfahren zum Herstellen eines Sicherheitspigments aus Kern-Hülle-Teilchen, umfassend einen auf einem thermoplastischen Polymer basierenden festen Kern, eine auf einem Kondensationspolymer basierende Hülle und einen im Kern in gelöster oder fein verteilter Form vorliegenden organischen oder metallorganischen Merkmalsstoff, aufweisend
a) den Schritt des Lösens des Merkmalsstoffs zusammen mit dem thermoplastischen Polymer in einem organischen Lösungsmittel und das Dispergieren der erhaltenen Lösung in Wasser oder einer wässrigen Lösung mittels eines Tensids;
b) das Bereitstellen der in einer Kondensationsreaktion zu polymerisierenden Präpolymer-Einheiten bei einem bestimmten pH-Wert, um die Kondensation des die Hülle bildenden Polymers um die dispergierten Tröpfchen des organischen Lösungsmittels zu erzielen;
c) das Entfernen des organischen Lösungsmittels, um die Kern-Hülle-Teilchen mit festem Kern zu bilden;
und optional d) das Verstärken der Hülle der Kern-Hülle-Teilchen durch Zugabe weiterer zu polymerisierender Präpolymer-Einheiten.

2. Verfahren nach Anspruch 1, wobei das thermoplastische Poylmer gewählt ist aus Polystyrol (PS), Polyacrylaten, Polyethylen (PE), Polypropylen (PP), Polycarbonaten (PC), Polyamiden (PA), Polyurethanen (PU), Polyharnstoffen (PH), Polyethylenterephthalat (PET) oder anderen Polyestern, bevorzugt aus Polystyrol (PS) oder aus einem der Polyacrylate Polymethylmethacrylat (PMMA), Polyvinylacetat (PVAC), Polyvinylchlorid (PVC), Polyacrylnitril (PAN), besonders bevorzugt aus Polystyrol (PS) oder Polymethylmethacrylat (PMMA).

3. Verfahren nach Anspruch 1 oder 2, wobei das Kondensationspolymer gewählt ist aus Aminoplasten, Phenoplasten, Melamin-Formaldehyd-Harzen (MF), Melamin-Phenol-Formaldehyd-Harzen (MPF), Phenol-Formaldehyd-Harzen (PF), Harnstoff-Formaldehyd-Harzen (UF), Melamin-Guanidin-Formaldehyd-Harzen oder Phenol-Resorcin-Formaldehyd-Harzen, bevorzugt Melamin-Formaldehyd-Harzen (MF).

4. Verfahren nach einem der Ansprüche 1 bis 3, wobei der Merkmalstoff ein fluoreszierender oder phosphoreszierender oder photochromer oder thermochromer Merkmalstoff oder ein UV- oder IR- oder VIS-Absorptionsfarbstoff ist.

5. Verfahren nach Anspruch 4, wobei der Merkmalstoff ein fluoreszierender oder phosphoreszierender Merkmalstoff ist, der im UV-Spektralbereich, insbesondere bei einer Wellenlänge von 365nm, anregbar ist und im sichtbaren Spektralbereich emittiert.

6. Verfahren nach Anspruch 4, wobei der Merkmalstoff ein fluoreszierender oder phosphoreszierender Merkmalstoff ist, der im IR-Spektralbereich, bevorzugt zwischen 700nm und 2500nm, emittiert.

7. Verfahren nach einem der Ansprüche 1 bis 6, wobei das Sicherheitspigment nach dem folgenden Testverfahren A5 gegen Toluol, Ethylacetat, Salzsäure (5%), Natronlauge (2%) und Natriumhypochlorit-Lösung (5% aktives Chlor) stabil ist, wobei die nach dem Test verbleibende Merkmalsintensität höher ist als 80% der Anfangsintensität:
- Einbringen der Sicherheitspigmente in einen Offset-Lack mit einer Pigmentierung von 15 Gewichtsprozent mit einem Dreiwalzenstuhl;
- Andrucken der so erhaltenen Druckfarbe im Offsetdruck mit einem Andruckgewicht von 2 g/m² auf Werttitelpapier bzw. Banknotenpapier;
- Trocknen des Andrucks bei 60°C für 12h;
- Eintauchen des Andrucks bzw. eines abgeschnittenen Teils des Andrucks in die jeweilige Testsubstanz, gegen welche die Stabilität des Andrucks ermittelt werden soll für einen Zeitraum von 5 Minuten;
- Entfernen des Andrucks aus der Testsubstanz und Abwaschen von anhaftender Testsubstanz mit Wasser;
- Trocknen des Andrucks bei 60°C für 2h;
- die quantitative Stabilität des Andrucks gegen die Testsubstanz ergibt sich aus dem Vergleich der Signalintensität des Andrucks vor und nach Behandlung mit der Testsubstanz bzw. dem Vergleich eines unbehandelten Teils des Andrucks mit einem behandelten Teil des gleichen Andrucks; Stabilität = (Intensität nach Behandlung mit Lösemittel) / (Intensität vor Behandlung mit Lösemittel).

8. Verfahren nach einem der Ansprüche 1 bis 7, wobei das im Kern enthaltene thermoplastische Polymer des erhaltenen Kern-Hülle-Teilchens Polymethylmethacrylat (PMMA) oder Polystyrol (PS) ist und die Hülle des erhaltenen Kern-Hülle-Teilchens aus Melamin-Formaldehyd-Harz (MF) ist.

9. Verfahren nach einem der Ansprüche 1 bis 8, wobei im Kern zwei unterschiedliche lumineszierende Farbstoffe in fein verteilter oder gelöster Form vorliegen, die ein Energietransfersystem bilden, bei dem der erste lumineszierende Farbstoff nach Anregung seine Anregungsenergie partiell oder vollständig an den zweiten lumineszierenden Farbstoff transferiert.

## Claims

1. A method for manufacturing a security pigment of core-shell particles, comprising a solid core based on a thermoplastic polymer, a shell based on a condensation polymer and an organic or organometallic feature substance present in dissolved or finely distributed form in the core, having
a) the step of dissolving the feature substance together with the thermoplastic polymer in an organic solvent and dispersing the obtained solution in water or an aqueous solution by means of a surfactant;
b) supplying at a certain pH value the prepolymer units to be polymerized in a condensation reaction, in order to achieve the condensation of the shell-forming polymer around the dispersed droplets of the organic solvent;
c) removing the organic solvent in order to form the core-shell particles with a solid core;
and optionally d) reinforcing the shell of the core-shell particles by adding further prepolymer units to be polymerized.

2. The method according to claim 1, wherein the thermoplastic polymer is selected from polystyrene (PS), polyacrylates, polyethylene (PE), polypropylene (PP), polycarbonates (PC), polyamides (PA), polyurethanes (PU), polyureas (PH), polyethylene terephthalate (PET) or other polyesters, preferably from polystyrene (PS) or from one of the polyacrylates polymethyl methacrylate (PMMA), polyvinyl acetate (PVAC), polyvinyl chloride (PVC), polyacrylonitrile (PAN), particularly preferably from polystyrene (PS) or polymethyl methacrylate (PMMA).

3. The method according to claim 1 or 2, wherein the condensation polymer is selected from aminoplasts, phenoplasts, melamine-formaldehyde resins (MF), melamine-phenol-formaldehyde resins (MPF), phenol-formaldehyde resins (PF), urea-formaldehyde resins (UF), melamine-guanidine-formaldehyde resins or phenol-resorcin-formaldehyde resins, preferably melamine-formaldehyde resins (MF).

4. The method according to any of claims 1 to 3, wherein the feature substance is a fluorescent or phosphorescent or photochromic or thermochromic feature substance or a UV or IR or VIS absorption dye.

5. The method according to claim 4, wherein the feature substance is a fluorescent or phosphorescent feature substance which can be excited in the UV spectral range, in particular at a wavelength of 365 nm, and emits in the visible spectral range.

6. The method according to claim 4, wherein the feature substance is a fluorescent or phosphorescent feature substance which emits in the IR spectral range, preferably between 700 nm and 2500 nm.

7. The method according to any of claims 1 to 6, wherein the security pigment is stable against toluene, ethyl acetate, hydrochloric acid (5%), sodium hydroxide solution (2%) and sodium hypochlorite solution (5% active chlorine) in accordance with the following test method A5, wherein the feature intensity remaining after the test is higher than 80% of the initial intensity:
- incorporating the security pigments in an offset lacquer having a pigmentation of 15 weight percent with a three-roll mill;
- proofing the thus obtained printing ink in offset printing with a printed weight of 2 g/m² on a value title paper or banknote paper;
- drying the proof at 60° C for 12 h;
- immersing the proof or a cut-off portion of the proof in the respective test substance against which the stability of the proof is to be ascertained for a period of 5 minutes;
- removing the proof from the test substance and washing off adhering test substance with water;
- drying the proof at 60° C for 2 h;
- the quantitative stability of the proof against the test substances results from the comparison of the signal intensity of the proof before and after treatment with the test substance or the comparison of an untreated portion of the proof with a treated portion of the same proof; stability = (intensity after treatment with solvent) / (intensity before treatment with solvent).

8. The method according to any of claims 1 to 7, wherein the thermoplastic polymer contained in the core of the obtained core-shell particle is polymethyl methacrylate (PMMA) or polystyrene (PS) and the shell of the obtained core-shell particle is of melamine-formaldehyde resin (MF).

9. The method according to any of claims 1 to 8, wherein two different luminescent dyes are present in finely distributed or dissolved form in the core, which form an energy transfer system in which the first luminescent dye after excitation transfers its excitation energy partially or completely to the second luminescent dye.

## Revendications

1. Procédé de fabrication d'un pigment de sécurité en particules noyau-coque comprenant un noyau solide basé sur un polymère thermoplastique, une coque basée sur un polymère de condensation et une substance caractéristique organique ou organométallique se trouvant dans le noyau sous forme dissoute ou finement répartie, comportant
a) l'étape de la dissolution de la substance caractéristique conjointement avec le polymère thermoplastique dans un solvant organique, et la dispersion de la solution obtenue dans de l'eau ou dans une solution aqueuse au moyen d'un tensioactif ;
b) la mise à disposition des unités de prépolymère, à polymériser dans une réaction de condensation, ayant une valeur pH définie, afin de parvenir à la condensation du polymère constituant la coque autour des gouttelettes dispersées du solvant organique ;
c) l'enlèvement du solvant organique afin de constituer les particules noyau-coque à noyau solide ; et, en option, d) le renforcement de la coque des particules noyau-coque par ajout d'autres unités de prépolymère à polymériser.

2. Procédé selon la revendication 1, cependant que le polymère thermoplastique est choisi parmi polystyrène (PS), polyacrylates, polyéthylène (PE), polypropylène (PP), polycarbonates (PC), polyamides (PA), polyuréthanes (PU), polyurées (PH), polyéthylène-téréphtalate (PET) ou autres polyesters, de préférence en polystyrène (PS) ou en un des polyacrylates polyméthacrylate de méthyle (PMMA), acétate de polyvinyle (PVAC), chlorure de polyvinyle (PVC), Polyacrylonitrile (PAN), particulièrement de préférence en polystyrène (PS) ou polyméthacrylate de méthyle (PMMA).

3. Procédé selon la revendication 1 ou 2, cependant que le polymère de condensation est en aminoplastes, phénoplastes, résines mélamine-formaldéhyde (MF), résines mélamine-phénol-formaldéhyde (MPF), résines phénol-formaldéhyde (PF), résines urée-formaldéhyde (UF), résines mélamine-guanidine-formaldéhyde ou résines phénol-résorcinol-formaldéhyde, de préférence résines mélamine-formaldéhyde (MF).

4. Procédé selon selon une des revendications de 1 à 3, cependant que la substance caractéristique est une substance caractéristique fluorescente ou phophorescente ou photochrome ou thermochrome ou un colorant d'absorption UV, IR ou VIS.

5. Procédé selon la revendication 4, cependant que la substance caractéristique est une substance caractéristique fluorescente ou phophorescente qui, dans la plage spectrale UV, en particulier à une longueur d'ondes de 365nm, est excitable et émet dans la plage spectrale visible.

6. Procédé selon la revendication 4, cependant que la substance caractéristique est une substance caractéristique fluorescente ou phophorescente qui émet dans la plage spectrale IR, de préférence entre 700nm et 2500nm.

7. Procédé selon une des revendications de 1 à 6, cependant que le pigment de sécurité est, selon le procédé de test suivant A5, stable vis-à-vis du toluène, de l'acétate d'éthyle, de l'acide chlorhydrique (5%), de la soude caustique (2%) et de la solution d'hypochlorite de sodium (5% de chlore actif), cependant que l'intensité de caractéristique restante après le test est supérieure à 80 % de l'intensité initiale :
- introduction des pigments de sécurité dans un vernis offset ayant une pigmentation de 15 pourcent par poids avec un moulin à trois rouleaux ;
- pressage, en impression offset, de l'encre d'impression ainsi obtenue avec un poids de pression de 2 g/m² sur papier à titres ou sur papier à billets de banque ;
- séchage de l'épreuve à 60°C pendant 12h ;
- immersion de l'épreuve ou d'une partie coupée de l'épreuve dans la substance de test respective vis-à-vis de laquelle la stabilité de l'épreuve doit être déterminée, pendant un laps de temps de 5 minutes ;
- enlèvement de l'épreuve hors de la substance de test, et lavage, à l'eau, de substance de test adhérante ;
- séchage de l'épreuve à 60°C pendant 2h ;
- la stabilité quantitative de l'épreuve vis-à-vis de la substance de test découle de la comparaison entre l'intensité de signal de l'épreuve avant et après le traitement avec la substance de test, ou de la comparaison entre une partie non traitée de l'épreuve et une partie traitée de la même épreuve ; stabilité = (intensité après traitement avec solvant) / (intensité avant traitement avec solvant).

8. Procédé selon une des revendications de 1 à 7, cependant que le polymère thermoplastique, contenu dans le noyau, de la particule noyau-coque obtenue, est du polyméthacrylate de méthyle (PMMA) ou du polystyrène (PS), et que la coque de la particule noyau-coque obtenue est en résine mélamine-formaldéhyde (MF).

9. Procédé selon une des revendications de 1 à 8, cependant que, dans le noyau, deux colorants luminescents différents se trouvent sous forme finement répartie ou dissoute, lesquels constituent un système de transfert d'énergie dans lequel le premier colorant luminescent transfère, après excitation, partiellement ou entièrement son énergie d'excitation au deuxième colorant luminescent.
